# EUROPEAN PATENT APPLICATION

(11) **EP 3 995 009 A1**
(43) Date of publication of application: **11.05.2022**
(21) Application number: 20206241.0
(22) Date of filing: 06.11.2020
(51) Int. Cl.: A24F 40/90, A24F 40/40, A24F 40/53

(54) **A RECHARGEABLE AEROSOL GENERATING DEVICE**

(71) Applicant: JT International SA, 1202 Geneva (CH)
(72) Inventor: ADAIR, Kyle, Lisburn, Country Antrim BT28 2UW (GB); POPOOLA, Olayiwola Olamiposi, Walton-on-Thames, KT12 2SJ (GB); LOVEDAY, Peter, Woking, Surrey GU24 9PW (GB)
(74) Representative: Gill Jennings & Every LLP

(57) **Abstract**

The present invention discloses an aerosol generating device comprising: a body (101) having a mouthpiece (102) at one end for inhalation of aerosol; a rechargeable battery (203) housed within the body; a glass opening 302 defined in the surface of the body; and a wireless charging receiver (104) configured to wirelessly charge the battery, wherein the wireless charging receiver is disposed in the body adjacent to the glass opening, so that it is as close as possible to a charging pad 301 when the e-cigarette 100 is placed laterally thereon. The material selection of thin glass allows minimal current loss between the charging pad and the receiver. The size of the wireless charging receiver is substantially the same as that of the glass opening. The e-cigarette can also be charged using a wired USB connection, and logic circuitry protects the battery from overcharging by preventing simultaneous wired and wireless charging.

## Description

### FIELD OF INVENTION

The present invention relates to an aerosol generating device such as an e-cigarette. More specifically, it relates to a rechargeable aerosol generating device.

### BACKGROUND

Aerosol generating devices such as vaping devices or e-cigarettes deliver aerosol, containing a flavour and/or nicotine, to a user for inhalation. Such devices have electronic components such as a controller, a heating unit, a communication unit, LEDs, etc. These components are powered by a battery contained inside the device. The battery usually lasts for a few hours or days depending on the usage and battery capacity. Once the battery is depleted, it needs replacing or recharging. Most devices come with rechargeable batteries which can be recharged by plugging into a power source.

Existing devices are provided with a USB charging adapter to which a cable can be connected and plugged into a power outlet to recharge the battery. However, a user may find it inconvenient to plug the device using a cable every time the battery needs recharging. Moreover, the USB charging adapter on the device and/or the connector on the cable may get faulty due to rough handling.

The present invention is aimed at addressing the above issues and provide a more convenient and optimised way of charging the battery of an aerosol generating device.

### SUMMARY OF THE INVENTION

According to an aspect of the invention, there is provided an aerosol generating device comprising a body having a mouthpiece at one end for inhalation of aerosol; a rechargeable battery housed within the body; a glass opening defined in the surface of the body; and a wireless charging receiver configured to wirelessly charge the battery, wherein the wireless charging receiver is disposed in the body adjacent to the glass opening, and the size of the wireless charging receiver is substantially the same as that of the glass opening.

Advantageously, by placing the wireless receiver close to the glass opening it is possible to minimise any losses, thereby wirelessly charging the device with greater efficiency. Moreover, by making the wireless receiver the same size as that of the glass opening, greater coupling is possible with a wireless transmitter, such as a charging pad, to maximise the delivery of charging current.

Preferably, the wireless charging receiver has a rectangular profile and is disposed laterally within the body of the device.

Preferably, the device also includes a wired charging receiver disposed within the body, separately from the wireless charging receiver.

Preferably, the device also includes a logic switch configured to enable only one of the wireless charging receiver and the wired charging receiver at the same time to charge the battery.

Advantageously, by providing the logic switch, it is possible to safely charge the battery of the device without the risk of overcharging or damaging the device by simultaneous wired and wireless charging.

Preferably, the logic switch is further configured to prioritise the wired charging receiver over the wireless charging receiver.

Preferably, the wireless charging receiver is disposed on a flexible printed circuit alongside other components in the device.

According to another aspect of the invention, there is provided a logic circuitry for the above described aerosol generating device, configured to determine if the device is being actively charged; and disable a wireless charging receiver if the device is determined being actively charged via a wired charging receiver.

### BRIEF DESCRIPTION OF THE DRAWINGS

The invention and its advantages will be better understood upon reading the following description, which is given by way of non-limiting example and which is made with reference to the appended drawings, in which:
Figure 1 shows an aerosol generating device according to an aspect of the invention;
Figure 2 shows various components of the aerosol generating device of Figure 1;
Figure 3 shows a cross-section view of the device of Figure 1 being placed on a charging pad; and
Figure 4 shows various components arranged on a PCB in the device of Figure 1.

### DETAILED DESCRIPTION

Before describing the invention, it is to be understood that it is not limited to the details of construction or process steps set forth in the following description. It will be apparent to those skilled in the art having the benefit of the present disclosure that invention is capable of other embodiments and of being practiced or being carried out in various ways.

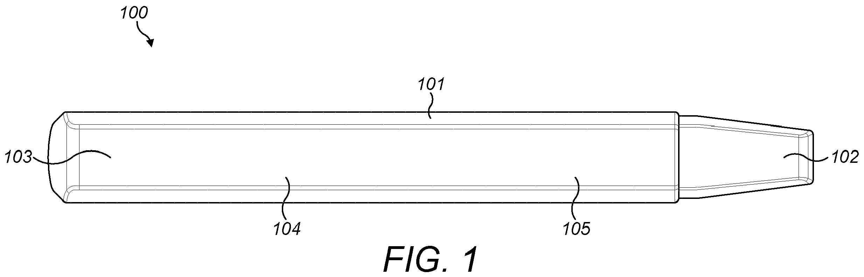

Figure 1 shows an aerosol generating device 100 according to an aspect of the invention. The aerosol generating device 100 having an outer body 101 may be a vaping device or an e-cigarette (also referred to as e-cig 100 hereinafter) to deliver an aerosol to a user, including an aerosol for smoking, by means of aerosol generating unit (e.g. a heater or atomizer which generates vapour which condenses into an aerosol before delivery to an outlet of the device at, for example, a mouthpiece 102, for inhalation by a user. The device 100 is portable. "Portable" may refer to the device being for use when held by the user. The device may be adapted to generate a variable amount of aerosol, e.g. by activating an atomizer for a variable amount of time (as opposed to a metered dose of aerosol), which can be controlled by a trigger. The trigger may be user activated, such as by an activation button and/or inhalation sensor (puff sensor). The inhalation sensor may be sensitive to the strength of inhalation as well as the duration of inhalation so as to enable more or less vapour to be provided based on the strength of inhalation (so as to mimic the effect of smoking a conventional combustible smoking article such as a cigarette, cigar or pipe, etc.).

The device 100 may include a temperature regulation control to drive the temperature of the heater and/or the heated aerosol generating substance (aerosol pre-cursor) to a specified target temperature and thereafter to maintain the temperature at the target temperature regardless of the amount of substrate (precursor) available at the aerosol generating unit and regardless of the strength with which the user inhales. More generally, the device 100 can comprise a control unit configured to adjust the device according to operational settings. Thus, the control unit can control the operation of the heater and/or the power provided for example by a battery and/or the pressure of the precursor or the air.

The device or e-cig 100 may also include other components such as a Bluetooth module and antenna 103 to communicate with other devices such as a smartphone, a wireless charging antenna 104 for wireless charging as described in detail below, and an NFC antenna 105 for interacting with entities such as a payment terminal.

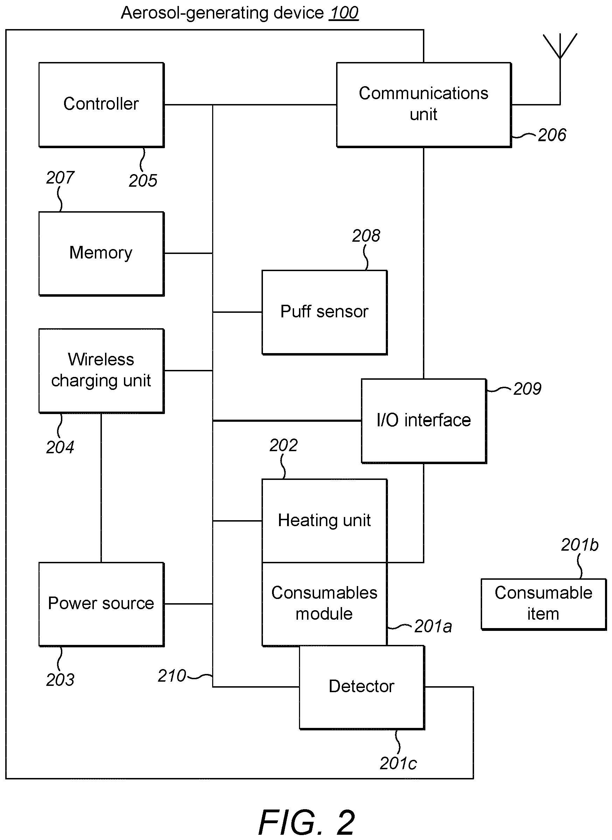

Figure 2 is a block diagram showing various components or modules of the aerosol generating device or the e-cig 100. In one example, the e-cig 100 comprises a consumables module 201a and a heating element 202 that vaporizes a consumable item or a cartridge 201b received by the consumables module 201a to release aerosol containing the flavour and/or stimulant for the user to inhale. In the present example, the consumable item 201b is a substance containing nicotine. Presence of the consumable item 201b in the consumables module 201a may be detected by a detector 201c. The consumable item 201b may be in the form of solid or liquid and is heated by a heating unit 202 to release the aerosol without combustion. In case the consumable item 201b is a liquid store, more than one consumable items can be received at the consumable module 201a. The heating unit 202 may be powered by a power source 203.

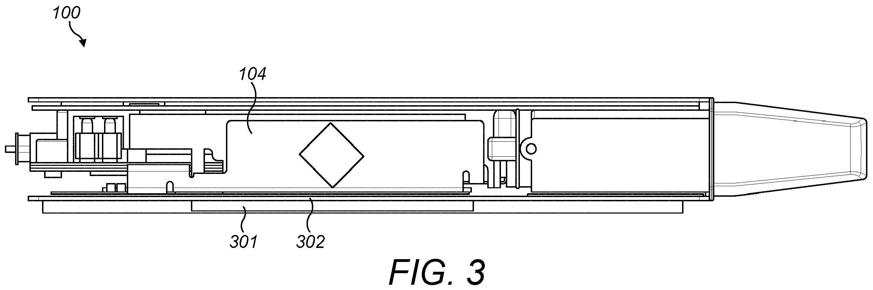

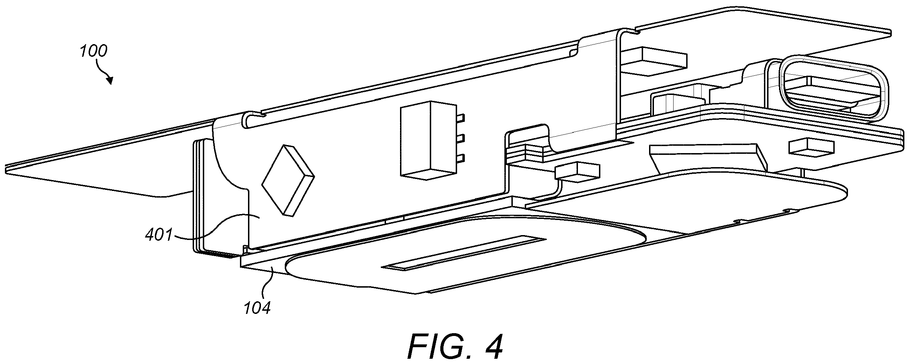

The power source 203 is, for example, a lithium ion battery. The power source 203 supplies an electric power necessary for an action of the e-cig 100. For example, the power source or battery 203 supplies the electric power to all other components or modules included in the e-cig 100. The battery 203 is a rechargeable battery which can be charged numerous times by an external power source such as mains outlet. The battery 203 can be recharged conventionally by a wired charging receiver such as a USB adapter provided in the e-cig 100. The battery 203 can be charged by connecting the device to a power outlet via the USB adapter. In addition, the battery 203 can also be charged wirelessly enabled by a wireless charging unit 204. For wireless charging, the e-cig 100 is placed on a charging pad comprising a wireless transmitter. A wireless receiver included in the e-cig 100, for example, in the wireless charging unit 204, interacts with the wireless transmitter in the charging pad for charging the battery 203. This is explained in further detail with reference with figures 3 and 4.

The e-cig 100 also includes a controller 205 that is configured to control various components in the e-cig. For example, the controller 205 may control a communication unit 206, a memory 207, and a puff sensor 208 included in the e-cig 100.

The communication unit 206 is configured to manage short range as well as long range communication with any personal computing device such as a smartphone, a remote server, a merchant terminal, or other e-cigs in the vicinity of the e-cig 100. The communications unit 206 may include a Bluetooth module, an RFID module, and a Near-Field Communication (NFC) module. The communication unit 206 is also able to perform communications using one of the known long-range protocols such as Wi-Fi, 3G, 4G, 5G, etc.

The puff sensor 208 is configured to determine the number of puff actions of inhaling the aerosol. The puff sensor 208 can also determine a time period required for one puff action of inhaling the aerosol. The recorded usage data can comprise puff duration (i.e., length of a puff), a puff interval (i.e., the time between consecutive puffs), and a fluid and/or nicotine consumption amount.

The e-cig 100 may also include a consumable recognition sensor (now shown) configured to identify the consumable item 201b inserted in the e-cig 100. The recognition sensor may be included in the consumables module 201a or the detector 201c. The recognition sensor may use NFC, RFID or any other known technique to recognise the strength of the stimulant contained in the consumable item 201b from an NFC/RFID tag disposed on the consumable item 201b.

The e-cig 100 may also include an Input-Output (I/O) or user interface 209 configured to provide indications to the user and to receive inputs from the user. The I/O interface 209 preferably comprises an indication device and an input device. The indication device may comprise a visual light emitting element including one or more Light Emitting Diodes (LEDs), a screen display, or a sound emitter, or other appropriate means to provide indication to users. The visual light-emitting element such as an LED may be disposed at the tip of the non-mouthpiece end, or on a side surface of the e-cig 100. Such an LED may exhibit various light-emitting mode to provide to user within indication of a puff state where the aerosol is being inhaled, a non-puff state where the aerosol is not being inhaled, a pre-heating state when the heater is heating up, a ready-to vape state when the heater operates at target temperature to generate aerosol, a depletion state where LED bar shows depletion level of the aerosol source, and any other information related to the operation status of the e-cig. The input device can be one or more user operable buttons or sensible touch panel, responsible to depression, toggling, or touch.

All the elements described above transmit and/or receive command and/or data via communication bus 210.

Figure 3 shows a cross-sectional internal view of the e-cig 100 placed on a charging pad 301. The charging pad 301 is plugged into a power source (not shown) and it includes a wireless charging antenna or transmitter, for example, in the form of an induction coil. Such wireless charging pads are known in the art, for example, wireless charging pads are widely available for wirelessly charging smartphones.

The e-cig 100 has the wireless antenna or receiver 104 disposed inside the body 101 such as the receiver 104 stays as close as possible to the charging pad 301 when the e-cig 100 is placed laterally on the charging pad 301. The receiver 104 and the charging pad 301 is separated by a thin glass opening 302 in the body 101 of the e-cig 100. The material selection of thin glass allows minimal current loss between the charging pad 301 and receiver 104. Moreover, a rectangular profile is chosen for the receiver 104 and the receiver 104 is made substantially the size as that of the glass opening with the highest Q-factor for maximum power coupling. This allows a greater transmission of charging current. This arrangement also allows maximum use of the area available within the device. In one example, the internal space in the e-cig 100 is 15 mm in width and the receiver 104 is also 15 mm wide.

As shown in figure 4, the wireless receiver 104 is in this embodiment provided on a main flexible circuit board 401 of the device itself. By doing so, it is possible to simplify manufacturing, save space, and improve reliability of the device.

As the e-cig 100 can also be charged in the conventional way using a wired USB connection, a safety feature is built into the device to protect the battery 203 from overcharging by simultaneous wired and wireless charging. To achieve this, the controller 205 is configured to activate a XOR logic switch when the battery 203 is charging, with priority for the wired USB charging over wireless charging. This ensures that the wireless and wired USB charging options operate completely independently. For example, if the e-cig 100 is placed on the charging pad 301 when the e-cig 100 is also actively connected to a power source, the controller 205 activates the XOR logic switch circuit to disable wireless charging. In another example, if the e-cig 100 is being charged wirelessly via the charging pad 301 and is accidently connected to the power source, the XOR logic switch circuit disables the wireless charging and allows the device to be charged via USB wired connection. Therefore, the device cannot be charged wirelessly and by the USB at the same time.

The foregoing description of illustrative embodiments has been presented for purposes of illustration and of description. It is not intended to be exhaustive or limiting with respect to the precise form disclosed, and modifications and variations are possible in light of the above teachings or may be acquired from practice of the disclosed embodiments.

## Claims

1. An aerosol generating device comprising:
a body having a mouthpiece at one end for inhalation of aerosol;
a rechargeable battery housed within the body;
a glass opening defined in the surface of the body; and
a wireless charging receiver configured to wirelessly charge the battery, wherein the wireless charging receiver is disposed in the body adjacent to the glass opening, and the size of the wireless charging receiver is substantially the same as that of the glass opening.

2. The device of claim 1, wherein the wireless charging receiver has a rectangular profile and is disposed laterally within the body of the device.

3. The device of claim 1 or 2, further comprising a wired charging receiver disposed within the body, separately from the wireless charging receiver.

4. The device of claim 3, further comprising a logic switch configured to enable only one of the wireless charging receiver and the wired charging receiver at the same time to charge the battery.

5. The device of claim 4, wherein the logic switch is further configured to prioritise the wired charging receiver over the wireless charging receiver.

6. The device of any preceding claim, wherein the wireless charging receiver is disposed on a flexible printed circuit alongside other components in the device.

7. A logic circuitry for the aerosol generating device of claim 1 configured to:
determine if the device is being actively charged; and
disable a wireless charging receiver if the device is determined being actively charged via a wired charging receiver.
